# EUROPÄISCHE PATENTSCHRIFT

(11) **EP 3 783 215 B1**
(45) Veröffentlichungstag und Bekanntmachung des Hinweises auf die Patenterteilung: **24.01.2024**
(21) Anmeldenummer: 20187577.0
(22) Anmeldetag: 24.07.2020
(51) Int. Cl.: F02D 13/02, F02D 41/14, F02D 41/24, F01L 1/344

(54) **VERFAHREN ZUR ADAPTION EINER ERFASSTEN NOCKENWELLENSTELLUNG, STEUERGERÄT ZUR DURCHFÜHRUNG DES VERFAHRENS, VERBRENNUNGSMOTOR UND FAHRZEUG**
METHOD FOR ADAPTING A DETECTED CAMSHAFT POSITION, CONTROL DEVICE FOR CARRYING OUT THE METHOD, COMBUSTION ENGINE AND VEHICLE
PROCÉDÉ D'ADAPTATION D'UNE POSITION D'ARBRE À CAMES DÉTECTÉE, APPAREIL DE COMMANDE PERMETTANT LA MISE EN OEUVRE DU PROCÉDÉ, MOTEUR À COMBUSTION INTERNE ET VÉHICULE

(30) Priorität: 15.08.2019 DE 102019212275
(43) Veröffentlichungstag der Anmeldung: 24.02.2021
(73) Patentinhaber: VOLKSWAGEN AG, 38440 Wolfsburg (DE)
(72) Erfinder: Mazur, Michael, 30519 Hannover (DE); Jeschke, Jens, 38106 Braunschweig (DE); Forst, Johannes, 30455 Hannover (DE); Blume, Holger, 30519 Hannover (DE); Gerhardt, Nico, 38524 Sassenburg (Westerbeck) (DE)

(56) Entgegenhaltungen:
- DE-A1-102015 209 665
- DE-A1-102015 221 203
- DE-A1-102017 118 624
- DE-B3-102008 004 442

## Beschreibung

Die Erfindung betrifft ein Verfahren zur Adaption einer erfassten Nockenwellenstellung einer Nockenwelle in einem Verbrennungsmotor. Die Erfindung betrifft weiter ein Steuergerät, das dazu eingerichtet und ausgebildet ist, ein solches Verfahren durchzuführen sowie einen Verbrennungsmotor, bei dem dieses Verfahren durchführbar ist und ein Fahrzeug mit einem solchen Verbrennungsmotor.

In modernen Verbrennungsmotoren, insbesondere bei Ottomotoren, werden zur exakten Luftsteuerung zunehmend verstellbare Nockenwellen und Ventilsteuerungen eingesetzt. Damit ist es inzwischen möglich, sowohl die Steuerphasen, die Steuerzeiten und die Steuerprofile flexibel der Einlass- bzw. Auslassventile zu gestalten.

Für die Verstellung der Steuerphasen sind dabei sogenannte Nockenwellenversteller im Einsatz, welche durch eine stufenlose Verstellung die Winkel der Steuernocken auf der Nockenwelle ermöglichen. Ergänzende variable Ventilsteuerungen (zum Beispiel die sogenannte, die bekannte Valve-Tronic) ermöglichen zusätzlich eine Variation des Ventilhubs und eine gleichzeitige Veränderung der Öffnungsdauer.

Damit sind auch zunehmend weitgehend entdrosselte Verbrennungsverfahren wie das Miller-Konzept zu realisieren, und zwar neben dem normalen Otto-Verfahren. Entdrosselt heißt in diesem Zusammenhang, dass die Luftfüllung weitgehend von der Betätigung der Drosselklappe entkoppelt werden kann und ausschließlich über die Steuerung der Einlass- und/oder Auslassventile erfolgt.

Mit der zunehmenden Verbreitung solcher Motorkonzepte (nockenwellengesteuerte und variable Ventilsteuerungen) steigen jedoch die Anforderungen an die Genauigkeit der Einstellung der Nockenwelle selbst und der Ventilverstellmechanismen. Da die Nockenwellen unmittelbar über die Kurbelwelle angetrieben werden, führen bereits geringe Abweichungen von der für eine bestimmte Zylinderfüllung vorgesehene Soll-Lage zu deutlichen Abweichungen in der lastabhängig bestimmten Zylinderfüllung und damit zu ungünstigen Emissionseinflüssen und Betriebszuständen.

Um sicherzustellen, dass die exakte Winkelstellung der Nocken bzw. der Nockenwellen im Verhältnis zu den Einlass- und Auslassventilen bzw. im Verhältnis zur Kurbelwellenstellung bekannt ist, sind sehr genaue Kurbel- und Nockenwellen Sensoranordnungen vorgesehen, die Position, Drehung und Stellung zueinander genau und hochdynamisch erfassen. Zur Kalibrierung werden Referenzsysteme verwendet. Ergänzend können sowohl die Nockenwellen selbst als auch die zugehörigen Sensoranordnungen während der Produktion und nach der Montage hochgenau vermessen werden. Fertigungsbedingte Abweichungen können so erfasst und kompensiert werden. Korrekturdaten zur Kompensation können im Motorsteuergerät individuell hinterlegt werden. Auf diese Weise können die notwendigen Positionen und Stellungen der Nockenwelle im Betrieb genau erfasst werden. Bei der lastabhängigen Steuerung der Verstellmechanismen der Nockenwelle und der Ventile kann die zugehörige Gassteuerung beim Ladungswechsel (Frischgaszufuhr, Abgasabfuhr) genau eingestellt werden. Insbesondere ist es so auch immer besser möglich, die Zylinderfüllung bzw. die Gasmenge (auch Frischgasmenge bzw. Frischluftmenge) lastabhängig und für bestimmte Verfahren weitgehend entdrosselt zu steuern.

Es besteht allerdings der Nachteil bzw. das Problem, dass bei geringen Abweichungen der eingemessenen und aufeinander abgestimmten Komponenten (Sensoren, Übertragungsglieder, Versteller etc.) Lageabweichungen auftreten, die die Gastwechselsteuerung und insbesondere die Einstellung der Frischgas- bzw. Luftmenge beeinträchtigen. Im Ergebnis bedeutet dies, dass zu einer abgerufenen Betriebslast nicht die gewünschte Luftmenge bereitgestellt wird. Das gleiche Problem tritt auch auf, wenn wesentliche Komponenten des Antriebsstranges ausgetauscht werden, die für die Steuerung der Luftmenge zusammenwirken. Dazu gehören Übertragungsglieder wie Ketten, Zahnräder und Riemen sowie die Sensoranordnungen, welche Lage und Drehrichtung der Kurbelwelle bzw. der Nockenwelle erfassen und an ein Motorsteuergerät übertragen.

Um eine optimale lastabhängige Gasmengensteuerung zu gewährleisten, kann es sinnvoll sein, nach jedem Umbau die Komponenten erneut genau zu vermessen und aufeinander abzustimmen. Es kann auch festgelegt werden, im Rahmen der Wartung genauere Bauteile zu verbauen oder die Applikation bzw. den Motor so "emissions-robust" auszulegen, dass gewisse Abweichungen tolerierbar sind.

Ein anderer Ansatz kann auch darin bestehen, aus der Analyse von Betriebsdaten des Motors solche Stellungsveränderungen zu ermitteln und steuerungstechnisch zu kompensieren.

Dazu gibt es in der DE 10 2016 219 584 B4 einen Ansatz, bei dem die kombinierte Identifizierung einer Einlassventilhub-Phasendifferenz und einer Auslassventilhub-Phasendifferenz eines Zylinders eines Verbrennungsmotors darauf basiert, dass aus den, dem jeweiligen Zylinder zuordenbaren dynamischen Druckschwingungen der Ansaugluft im Luftansaugtrakt die Phasenlage und die Amplitude einer ausgesuchten Signalfrequenz der Druckschwingungen in Bezug auf ein Kurbelwellen-Phasenwinkelsignal ermittelt werden. Auf der Basis dieser Phasenlagen und Amplituden wird dann mit Hilfe von Linien gleicher Phasenlage und Linien gleicher Amplitude die Einlassventilhub-Phasendifferenz und die Auslassventilhub-Phasendifferenz bestimmt. Dieses Verfahren soll eine Identifizierung der Steuerzeiten auf eine einfache und kostengünstige Weise durchführen.

Ein ähnliches Verfahren ist aus der DE 10 2016 222 533 B4 bekannt. Dabei werden Abweichungen im Ventiltrieb des Verbrennungsmotors erkannt und entsprechend gesteuert, indem eine Einlassventilhub-Phasendifferenz und/oder eine Auslassventilhub-Phasendifferenz mittels der Analyse von dynamischen Druckschwingungen der Ansaugluft im Luftansaugtrakt des betreffenden Verbrennungsmotors im Betrieb ermittelt werden und daraus ein Ventilhub-Phasen-Abweichungswert in Bezug auf einen Ventilhub-Phasen-Referenzwert bestimmt und auf Basis dessen ein erster Abweichungswert des Ventiltriebes ermittelt wird. Weitere Verfahren dieser Art sind aus der DE 10 2015 209665 A1, der DE 10 2008 004442 B3, der DE 10 2015 221203 A1 und der DE 10 2017 118624 A1 bekannt.

Diese Beide Verfahren ermöglichen im Prinzip eine Ermittlung von Phasendifferenzen, die im Betrieb eines Motors auftreten können. Sie erlauben auch den steuertechnischen Ausgleich einer solchen Phasendifferenz.

Ein Problem bei diesen Ansätzen kann jedoch darin bestehen, dass die Genauigkeit der Kompensation nur schwer zu beurteilen ist und damit auch möglicherweise nur eingeschränkt sichergestellt werden kann, ob der Korrekturwert tatsächlich geeignet ist, eine Phasendifferenz hinreichend auszugleichen.

Aufgabe der vorliegenden Erfindung ist es daher, ein Verfahren zur Adaption einer erfassten Nockenwellenstellung einer Nockenwelle in einem Verbrennungsmotor bereitzustellen, bei dem die oben genannten Nachteile wenigstens teilweise überwunden werden.

Diese Aufgabe wird durch das erfindungsgemäße Verfahren gemäß Anspruch 1, das Steuergerät gemäß Anspruch 12, der Verbrennungsmotor gemäß Anspruch 13 und das Fahrzeug gemäß Anspruch 14 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Das erfindungsgemäße Verfahren zur Adaption einer erfassten Nockenwellenstellung einer Nockenwelle in einem Verbrennungsmotor zeichnet sich durch Folgendes aus:
- Erfassen eines IST-Gassignals in einem der Nockenwelle zugeordneten Gasraum, das einer erfassten Nockenwellenstellung zugeordnet ist,
- Verarbeiten des Gassignals zu einem IST-Gaskriterium,
- Modellieren mehrerer simulierter Gaskriterien, die jeweils einer Nockenwellenstellung (insbesondere eine Soll-Nockenwellenstellung) zugeordnet sind,
- Vergleichen der simulierten Gaskriterien mit dem IST-Gaskriterium,
- Bestimmen eines simulierten Gaskriteriums mit der geringsten Abweichung vom IST-Gaskriterium,
- Bestimmen einer IST-Nockenwellenstellung, die dem simulierten Gaskriterium mit der geringsten Abweichung zum IST-Gaskriterium entspricht,
- Bestimmen eines Nockenwellenstellungs-Korrekturwertes, aus der Differenz zwischen der bestimmten IST-Nockenwellenstellung und der erfassten Nockenwellenstellung und
- Bestimmen korrigierter Nockenwellenstellungen mittels Korrektur der erfassten Nockenwellenstellungen um den Nockenwellenstellungskorrekturwert.

Das Verfahren nutzt dabei den Zusammenhang zwischen einer Nockenwellenstellung und den davon unmittelbar abhängigen Stellungen der Einlass- und Auslassventile mit dem Gaszustand in einem dem Brennraum des Verbrennungsmotors vorgelagerten Gasraumes bzw. einem nachgelagerten Gasraum, nämlich dem Luft-Ansaugtrakt oder dem Abgas-Auslasstrakt. Diese sind jeweils durch die Einlass- bzw. Auslassventile mit dem Brennraum gekoppelt.

Der Begriff "Nockenwellenstellung" bezeichnet in diesem Zusammenhang Stellung einer verstellbaren Nockenwelle, die sich auf die Ansteuerung (Phasenlage, Steuerzeit, Steuerprofil) eines angesteuerten Ventils auswirkt und nicht die Drehlage im Betrieb, die von der Drehstellung einer antreibenden Kurbelwelle abhängt.

Das Erfassen eines IST-Gassignals umfasst hier die Detektion einer Gasgröße bzw. eines Gasgrößenverlaufs im Luftansaugtrakt oder im Abgasauslasstrakt. So eine Gasgröße kann beispielsweise der Ansaugdruck p₂ bzw. der Abgasgegendruck p₃ sein oder die dort auftretenden Gasvolumenströme V₂ oder V₃. Andere Gasgrößen können auch die Temperaturen T₂ bzw. T₃ vor bzw. nach dem Brennraum sein oder andere Gaseigenschaften wie Strömungsgeschwindigkeit und Dichte.

Für einen optimalen Betrieb des Verbrennungsmotors hinsichtlich der Emissionen, des Verbrauchs, der Leistung, der Laufruhe etc. ist es wünschenswert, die in den Brennraum eingebrachte Gasladung genau zu bestimmen. Damit können die weiteren Parameter für eine optimale Verbrennung, insbesondere die zuzuführende bzw. direkt eingespritzte Kraftstoffmenge, abgestimmt werden. Der Ladungswechsel, bei dem das Frischgas angesaugt bzw. zugeführt wird, und das Abgas ausgeschoben bzw. abgeführt wird, hängt unter anderem von den Steuerzeiten, -profilen und -phasen der Einlass- und Auslassventile ab.

Der zeitliche Verlauf der jeweiligen Ventilhübe wird über die Kurbelwelle im zeitlichen Zusammenhang mit dem Verlauf des eigentlichen Kolbenhubs gesteuert. Der Ladungswechsel wird im Betrieb über die Stellungen der Ein- und Auslassventile in Relation zum KurbelwellenPhasenwinkel und somit zur Stellung des Hubkolbens abhängig.

Um die Gasladung bzw. den Ladungswechsel optimal für jeden Betriebspunkt einstellen zu können, werden die erforderlichen Steuerparameter durch Vermessung eines Referenzmotors in den auftretenden Betriebszuständen erfasst. Typische Betriebszustände sind dabei Drehzahl, Last, die mit den zugehörigen Ventilsteuerzeiten und eventuell ergänzenden Betriebsparametern von Abgasturboladern oder anderen Ladeeinrichtungen erfasst und gespeichert werden. Daraus wird ein Referenzdatensatz abgeleitet, der die jeweils gewünschte Luftfüllung in Abhängigkeit von den zugehörigen Ventilsteuerzeiten und Nockenwellenphasenversteller umfasst. In anderen Worten, für jede Nockenwellenstellung bzw. einer Nockenwellenphasenstellung ist eine typischer Gasgröße bestimmt, welche die erforderliche Gasfüllung kennzeichnen. Gleiches gilt auch für eine entsprechende Gasgröße für die Abgasabfuhr. Fertigungstoleranzen und Abweichungen zwischen dem Referenzmotor und dem jeweiligen Serienverbrennungsmotor können durch festeinstellbare Korrekturwerte ausgeglichen werden.

Im Betrieb oder durch Austausch maßgeblicher Komponenten können Abweichungen zwischen den tatsächlichen Relativpositionen zwischen Einlass- und Auslassventilen und dem Kurbelwellenphasenwinkel bzw. der Hubkolbenposition von den idealen Referenzpositionen auftreten. Diese verändern den Gaswechsel oder Ladungswechsel. Dadurch weicht die tatsächliche Frischgasladung von der als Referenz bestimmten Frischgasladung ab. Das bedeutet, dass die Steuerparameter korrigiert werden müssen, um negative Auswirkungen bezüglich Emissionen, Verbrauch, Leistung, Laufruhe etc. auszugleichen.

Erfindungsgemäß wird dazu ein IST-Gassignal erfasst, welches einer erfassten Nockenwellenstellung zugeordnet ist. Das IST-Gassignal kann dabei auch ein Gassignalverlauf über einen bestimmten Zeitraum beispielsweise eine Kurbelwellenumdrehung oder ein vollständiger Verbrennungszyklus sein, so dass ein komplettes Gassignalprofil erfasst wird, das zu einer bestimmten Nockenwellenstellung korreliert.

Zur vereinfachten Weiterverarbeitung wird dieses IST-Gassignal zu einem IST-Gaskriterium verdichtet oder vereinfacht. Zur Umwandlung des IST-Gassignals in ein IST-Gaskriterium können beispielsweise Signalbearbeitungsalgorithmen wie ein FFT-Filter (Fast Fourier Transformationsfilter), ein Bandpassfilter oder ähnliches verwendet werden. Bei all diesen Verfahren werden die Rohsignaldaten reduziert, so dass zwar die charakteristischen Zusammenhänge zwischen dem Signal und dem Nockenwellenverlauf bzw. dem Ventilverlauf bestehen bleiben, die Datenmenge aber so weit reduziert wird, dass Verarbeitung und Speicherung vereinfacht werden.

In einem weiteren Schritt werden dann simulierte Gaskriterien modelliert, welche die gleichen Charakteristika aufweisen wie das IST-Gaskriterium. Dies können auch Kriterienverläufe sein, die mit den entsprechenden Verläufen der Nockenwellen bzw. der Einlass- bzw. Auslassventile korrelieren. Diese simulierten Gaskriterien werden dann variiert, indem die Kriterien für unterschiedlichen Nockenwellenstellungen modelliert werden, so dass eine Schar simulierter Gaskriterien vorliegt, die jeweils zu einer bestimmten Nockenwellenstellung gehören.

Die Variation erfolgt beispielsweise dadurch, dass eine virtuelle, relative Verstellung der Nockenwellen(phase) zu einem bestimmten Kurbelwellenwinkel stattfindet. Damit werden die Steuerphasen relativ zum Kurbelwinkel nach vorne bzw. nach hinten in Relation zum Kurbelwellenwinkel verschoben. Damit liegen simulierte Gaskriterien für den relevanten Stellbereich, insbesondere den Toleranzbereich einer Nockenwellenstellung vor. Der Toleranzbereich kann bei +/- 5° und insbesondere auch bei +/- 3° liegen.

Modellierungsmethoden bzw. -hilfsmittel für diese simulierten Gaskriterien sind ebenfalls mathematische Signalverarbeitungsalgorithmen und -systeme wie: Gausssche Prozessmodelle, neuronale Netze, Polynommodelle, inverse FFT (Fast Fourier Transformation). Wichtig ist dabei, dass die Schar der simulierten Gaskriterien die gleichen Charakteristika aufweist wie das aus dem Gassignal abgeleitete IST-Gaskriterium.

In einem nächsten Schritt wird dann das IST-Gaskriterium mit den simulierten Gaskriterien verglichen. Dabei wird eines der simulierten Gaskriterien bestimmt, welches die geringste Abweichung zum Gaskriterium hat, aufweist. Diese Bestimmung erfolgt ebenfalls mit Hilfe statistisch-mathematischer Methoden, wie beispielsweise: Mittelwertbildung, Meridianbildung, Auswertung einer Standardabweichung. Auf diese Weise lässt sich das simulierte Gaskriterium bestimmen, welches die geringste Abweichung vom IST-Gaskriterium hat. Zu diesem simulierten Gaskriterium mit der geringsten Abweichung lässt sich eine IST-Nockenwellenstellung bestimmen, die dem simulierten Gaskriterium mit der geringsten Abweichung zum IST-Gaskriterium entspricht.

In einem nächsten Schritt lässt sich dann die Abweichung bzw. die Differenz zwischen dieser bestimmten IST-Nockenwellenstellung und der erfassten Nockenwellenstellung (zum IST-Gassignal gehörig) bestimmen. Diese Differenz kennzeichnet die Abweichung zwischen der IST-Nockenwellenstellung und der erfassten Nockenwellenstellung. Diese Differenz kann beispielsweise durch Verschleißerscheinungen und das Auswechseln von Komponenten bzw. von Veränderungen im Kurbelwellen-Nockenwellen-Ventil-System herrühren. Aus dieser Differenz kann dann ein Nockenwellenstellungs-Korrekturwert bestimmt werden, der dazu dient, korrigierte Nockenwellenstellungen zu bestimmen, indem erfasste Nockenwellenstellungen um den ermittelten Nockenwellen-Stellungskorrekturwert korrigiert werden.

Die Anwendung des Nockenwellenstellungs-Korrekturwerts auf die erfasste Nockenwellenstellungen stellt dann wieder eine hohe Übereinstimmung zwischen der so korrigierten Nockenwellenstellung und einer IST-Nockenwellenstellung, die zu dem erfassten IST-Gassignal gehört. Auf diese Weise ist es während des Fahrzeugbetriebes auf einfache und sehr zuverlässige Art und Weise möglich, Nockenwellenstellungen zu korrigieren bzw. zu adaptieren.

Dabei gibt es Verfahren, bei denen die korrigierten Nockenwellenstellungen eine Einlassnockenwelle und/oder eine Auslassnockenwelle bestimmt werden. Durch die Wahl oder die Kombination korrigierter Nockenwellenstellungen lässt sich der Ladungswechsel besonders genau korrigieren bzw. lässt sich durch die Auswahl einer Nockenwellenstellungskorrektur das Verfahren entsprechend vereinfachen, ohne dass es zu größeren Ungenauigkeiten bei der Bestimmung der Füllgas- bzw. Abgasmenge kommt. Insbesondere die Anwendung des Verfahrens auf eine Einlassnockenwelle stellt die für die wesentlichen Abgasgrößen erforderliche, genaue Bestimmung der Füllgasmenge bzw. der Frischluftmenge sicher.

Dabei gibt es Verfahren, bei denen ergänzend zum Bestimmen einer korrigierten Nockenwellenstellung auch ein Ventilstellungskriterium modelliert wird, welches ein Einlass- und/oder ein Auslassventil betrifft. Solche Ventilstellungskriterien können weitergehende Einstellungsmöglichkeiten sein, bei denen nicht nur der Einstellwinkel, also die Nockenwellenstellung bzw. der Phasenwinkel der Nockenwelle eingestellt werden, sondern auch weitere Einstellungsparameter, die sich auf das Ventilhubprofil auswirken können. Damit lassen sich weitere Veränderungen der Ventilsteuerung (Steuerprofil, Steuerzeiten) realisieren, die über eine reine Phasenverschiebung durch die Einstellung der Nockenwelle hinausgehen.

Dabei gibt es Verfahren, bei denen das Modellieren eines Ventilstellungskriteriums um die Modellierung einer Luftfüllung bzw. einer Frischgasfüllung auf der Grundlage der Ventilstellungskriterien ergänzt wird. Auf diese Weise lassen sich dann die Zylinderfüllung bzw. die Frischgasfüllung besonders genau und wiederholgenau realisieren.

Es gibt Verfahren, bei denen die erfasste Nockenwellenstellung mittels einer Nockenwellen- und einer Kurbelwellenstellungssensoranordnung in Relation zu einer Kurbelwellenstellung bestimmt wird. Mit Hilfe solcher Sensoranordnungen lassen sich Größen exakt auf eine Kurbelwellenstellung abstimmen.

Dabei gibt es Verfahren, bei denen die Kurbelwellenstellungs-Sensoranordnung bzw. die Nockenwellenstellungs-Sensoranordnungen einen der folgenden Sensoren umfasst: induktiver Drehzahlsensor, Differential-Hall-Sensor, AMR-Sensor, Hall-Phasensensor. Solche typischerweise als Motordrehzahlsensoren oder Drehzahlgeber bezeichneten Sensoren sind für das Motormanagement vorteilhaft. Mit ihnen kann man sowohl die Motordrehzahl als auch die Winkellage der Kurbelwellen und damit auch die Hublage der Motorkolben bestimmen.

Zusätzlich erlauben sie eine genaue Ermittlung der Arbeitsspielposition bei Viertaktmotoren (0 bis 720 Grad Kurbelwellenwinkel), indem die Lage der Nockenwelle in Bezug auf die Kurbelwelle erkannt wird. In der Regel werden dabei über Impulsräder magnetische Feldänderungen erzeugt. Damit steigt bei ansteigender Drehzahl die Anzahl der erzeugten Impulse. Die Sensoren können entweder induktiv arbeiten oder unter Nutzung des Hall-Effektes oder als AMR-Sensoren (Anisotropie Magneto-Resistance Sensor). In Verbindung mit verstellbaren Nockenwellen sind Hall-Phasensensoren im Einsatz. Auch Phasensensoren werden verwendet, um die Stellung der Kurbelwelle im Verhältnis zu einer Nockenwellenstellung anzuzeigen. Damit lässt sich die wichtige Unterscheidung treffen, ob sich ein nach oben bewegender Motorkolben im Verdichtungs- oder im Ausstoßtakt befindet. Diese Information kann für die Ermittlung des Verstellwinkels der Nockenwelle (Nockenwellenstellung) wichtig.

Es gibt Verfahren, bei denen das IST-Gassignal ein IST-Drucksignal ist. Der Druckverlauf im Luftansaugtrakt bzw. im Abgasauslasstrakt lässt sich besonders leicht durch Drucksensoren erfassen.

Es gibt Verfahren, bei denen das IST-Gassignal ein IST-Volumenstromsignal ist, der ebenfalls sehr genau und hochauflösend zu erfassen ist. Damit lassen sich Signalverläufe erfassen, die mit dem Ventilstellungsverlauf korrelieren. Dabei gibt es Verfahren, bei denen das IST-Gassignal als Ansaugrohr-Druckverlaufsignal in einem Ansaugkrümmer (Luftansaugtrakt) erfasst wird.

Es gibt auch Verfahren, bei denen das IST-Gassignal als Abgasrohr-Druckverlaufsignals in einem Abgaskrümmer erfasst wird (Abgasauslasstrakt). Dabei ist die Aufnahme des Drucks im Ansaugrohrkrümmer bzw. im Abgaskrümmer besonders hilfreich, da die Druckverläufe dann nahe den Einlass- bzw. Auslassventilen erfasst werden und so eine hohe Korrelation zwischen Ventilverlauf (und Nockenwellenbewegung) und dem erfassten Gassignal besteht.

Dabei gibt es Verfahren, bei denen das Verarbeiten des Gassignals zu einem Gaskriterium mittels eines Signalfilterverfahrens erfolgt, insbesondere unter Verwendung eines der folgenden Verfahren: FFT-Filterverfahren (Fast Fourier Transformation), Bandpassfilterverfahren. Diese Verfahren erlauben eine einfache Datenreduktion, die aber gleichzeitig sicherstellen, dass relevante und charakteristische Signaldaten erhalten bleiben.

Es gibt Verfahren, bei denen das Erzeugen der simulierten Gaskriterien mittels eines computerimplementierten Modellierungsverfahrens bzw. -systems erfolgt. Dabei werden insbesondere die folgenden Mittel verwendet: neuronale Netze, Gausssche Prozessmodelle, Polynommodelle, inverse FFT, weitere empirische oder physikalisch motivierte Modelle. Diese Verfahren erlauben die Simulation der Gaskriterien, so dass sie mit den ermittelten Gaskriterien gut zu vergleichen sind und charakteristische Größen einander entsprechen.

Es gibt Verfahren, bei denen zum Bestimmen der IST-Nockenwellenstellung eines der folgenden computerimplementierten Vergleichsverfahren durchgeführt wird. Kreuzkorrelationsverfahren, Standardabweichung, Mittelwertbildung. Bei diesen Verfahren handelt es sich um besonders einfach und genau anzuwendende statistische Auswertemethoden, die es erlauben, die Übereinstimmung zwischen den ermittelten Gaskriterien und den simulierten Gaskriterien festzustellen.

Die Erfindung betrifft weiter ein Steuergerät, das dazu eingerichtet und ausgebildet ist, das erfindungsgemäße Verfahren auszuführen. In so einem Steuergerät können sowohl die notwendigen Signalverarbeitungsschritte als auch die notwendigen Vergleichsalgorithmen durchgeführt werden. Zusätzlich sind die erforderlichen gespeicherten Daten fest oder variabel in so einem Steuergerät vorzuhalten.

Ein Verbrennungsmotor mit einem zur Einstellung einer Gasmenge geeigneten Steuergerät erlaubt es, mehr oder weniger selbst adaptierend die Abstimmung einer Nockenwellenverstellung und der davon abhängigen Gaswechselsteuerung selbstkorrigierend vorzunehmen. Damit können Verschleiß- und/oder wartungsbedingte Veränderungen ohne aufwändige zusätzliche Vermessungen und Abstimmungen korrigiert werden.

In einem Fahrzeug mit einem solchen Verbrennungsmotor lässt sich das erfindungsgemäße Verfahren realisieren. Und es lässt sich dauerhaft ein emissionsarmer und lastoptimierter Fahrbetrieb realisieren.

Ausführungsbeispiele der Erfindung werden nun beispielhaft und unter Bezugnahme auf die beigefügte Zeichnung beschrieben. Dabei zeigt:
- Fig. 1: eine schematische Darstellung eines Kraftfahrzeugs mit einem Verbrennungsmotor zur Ausführung des erfindungsgemäßen Verfahrens;
- Fig. 2: ein schematisches Blockschaubild mit den einzelnen Funktionsblöcken zur Ausführung des erfindungsgemäßen Verfahrens;
- Fig. 3: den Signalverlauf eines IST-Drucksignals und IST-Druckkriteriums;
- Fig. 4: das IST-Druckkriterium;
- Fig. 5: das IST-Druckkriterium gemeinsam mit einer Schar simulierter Druckkriterien und
- Fig. 6: den Verlauf der Standardabweichung der Differenzen zwischen einzelnen Druckkriterien und dem IST-Druckkriterium zur Bestimmung eines Nockenwellenstellungs-Korrekturwertes.

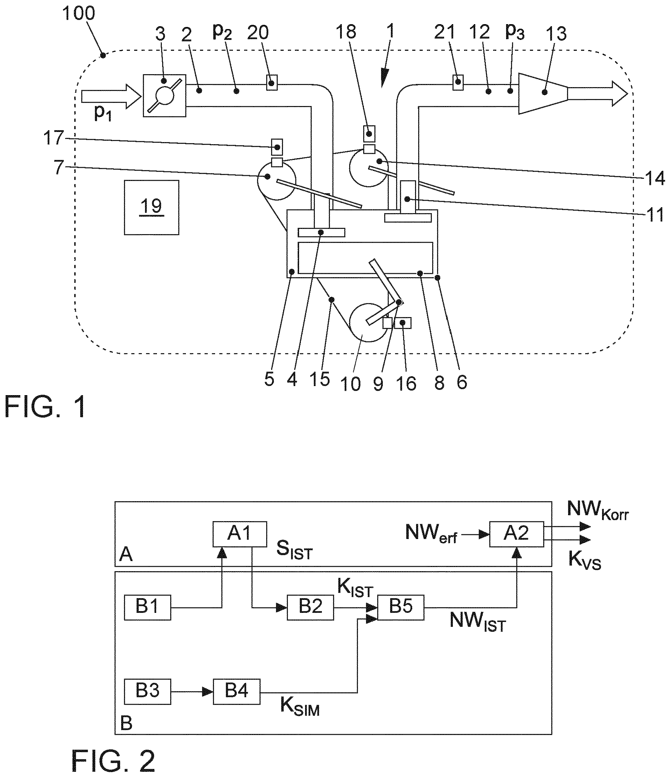

Fig. 1 zeigt in schematischer Darstellung ein Fahrzeug 100 mit einem Verbrennungsmotor 1, der Folgendes aufweist: Über einen Ansaugkrümmer 2, der zwischen einer Drosselklappe 3 und einem Einlassventil 4 verläuft, wird Frischluft bzw. Frischgas in den Verbrennungsraum 5 des Zylinders 6 geführt. Die Bewegung des Einlassventils 4 wird über die verstellbare Einlass-Nockenwelle 7 gesteuert. Im Zylinder 6 oder im Ansaugkrümmer 2 wird der zugeführten Frischluft Kraftstoff beigemischt, der im Zylinder verbrannt wird und dabei den Kolben 8 antreibt. Die Kolbenbewegung wird über die Kurbel 9 auf die Kurbelwelle 10 übertragen, deren Drehbewegung über einen nicht dargestellten Antriebsstrang zum Antrieb des Fahrzeugs 100 genutzt wird.

Nach der Verbrennung schiebt der Kolben 8 das Abgas über das Auslassventil 11 aus dem Verbrennungsraum 5 in den Abgaskrümmer 12 und tritt dann weiter durch die Turbine 13 eines Abgasturboladers, der optional mit einem Wastegate-Ventil bzw. einer verstellbaren Turbinengeometrie ausgestattet sein kann. Das Auslassventil 11 wird über die Auslass-Nockenwelle 14 angetrieben. Die Kurbelwelle 10 treibt über einen Antriebsriemen 15 die Auslass-Nockenwelle 14 und die Einlass-Nockenwelle 7 an und betätigt damit auch das Einlassventil 4 und das Auslassventil 11.

Die Drehbewegungen der Kurbelwelle 10 werden über einen Kurbelwellensensor 16 und die Drehbewegungen der Nockenwellen 7, 14 jeweils über einen Einlass-Nockenwellensensor 18 und einen Auslass-Nockenwellensensor 18 erfasst. Diese liefern entsprechende Signale an ein Motorsteuergerät 19. Im Bereich des Ansaugkrümmers bzw. im Bereich des Abgaskrümmers sind ein oder mehrere Gassignalsensoren 20, 21 zur Erfassung eines Gassignals bzw. eines Signalverlaufs S_{IST} angeordnet. Im vorliegenden Beispiel handelt es sich um Drucksensoren, die jeweils einen Ansaugdruck p₂ und einen Abgasgegendruck p₃ erfassen.

In anderen Ausführungen können die entsprechenden Gassignale S_{IST} auch ein Volumenstrom sein oder ein Temperaturverlauf, die dann durch andere entsprechend geeignete Sensoren erfasst und aufgezeichnet werden und an das Motorsteuergerät 19 abgegeben werden.

Der Ablauf des Verfahrens wird nun beispielhaft anhand der Figuren 2 bis 6 erläutert. Das Blockschaltbild zeigt einen Erfassungs-Steuerblock A, der in einem serienmäßigen Motorsteuergerät 19 vorhanden ist und einen Spezial-Steuerblock B, der speziell zur Implementierung des erfindungsgemäßen Verfahrens vorgesehen ist.

Zunächst erfolgt im Block B1 eine Adaptionsfreigabe. Dazu wird ein definierter Betriebszustand des Verbrennungsmotors 1 abgefragt. Dazu befindet sich der Motor in einem Betriebszustand, in dem kein Kraftstoff zugeführt bzw. eingespritzt wird. Zusätzlich werden die Betriebsstellungen der Drosselklappe 3 und eines gegebenenfalls vorhandenen Wastegate-Ventils abgefragt bzw. die Stellung einer variablen Turbinengeometrie, die alle in einem definierten Bereich liegen müssen. Auch der Umgebungsdruck p₁ und die Temperatur T₂ im Saugrohr müssen innerhalb eines definierten Bereiches liegen. Weiterhin muss die Motordrehzahl n ebenfalls in einem vorgegebenen Drehzahlbereich liegen. Dazu werden die Drehzahlsignale des Kurbelwellensensors 16, ein Temperatursignal T₁ über einen gegebenenfalls vorhandenen Temperatursensor abgefragt und der Umgebungsdruck p₁ (außerhalb des Saugrohres) bestimmt. Liegen die entsprechenden Bedingungen vor, so wird die Druckerfassung im Block A1 durchgeführt. Dazu dient ein erfasstes entsprechendes Signal des Drucksensors 20 im Ansaugkrümmer 2 bzw. im Abgaskrümmer 12.

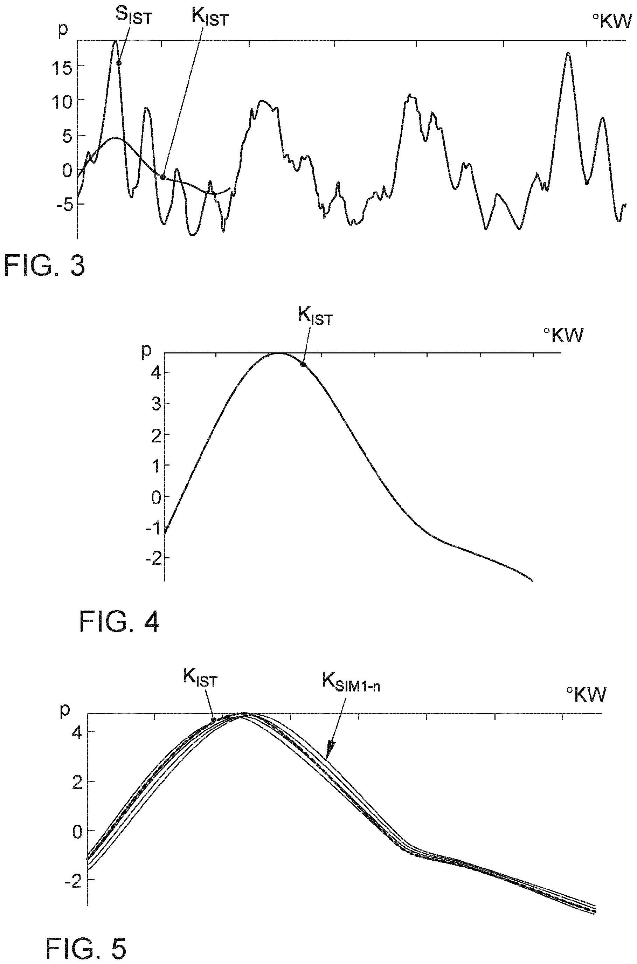

Der entsprechende Signalverlauf für dieses IST-Gas S_{IST} ist in Fig. 3 dargestellt. Im Filterbaustein B2 wird dann dieses Gassignal S_{IST} mittels eines elektronischen Filters bearbeitet (zum Beispiel ein Bandpassfilter, ein FFT-Filter oder ähnliches) und als IST-Gaskriterium ausgegeben. Der Verlauf des IST-Gaskriteriums ist in den Fig. 3 dargestellt und zeigt eine deutlich reduzierte Informations- und Datendichte, erlaubt es aber, charakteristische Signaldaten zu betrachten.

Fig. 4 zeigt den Verlauf des IST-Gaskriteriums isoliert. Die Verläufe in den Fig. 3 und 4 sind jeweils über den Kurbelwellenwinkel aufgetragen. Das IST-Gaskriterium K_{IST} wird weiter in einen Vergleichsblock B5 geführt.

Zum Vergleich wird dann im Modellierungsblock B4 ein Gaskriterium K_{SIM} modelliert, und zwar unter Berücksichtigung der Daten zum Betriebspunkt, an dem das IST-Gaskriterium K_{IST} bestimmt worden ist. Diese Informationen zum Betriebspunkt oder zum Referenzmodell liefert der Steuerblock B3. Aus dem simulierten Gaskriterium K_{SIM} wird eine Gaskriteriumsschar K_{SIM1-n} abgeleitet, die im Block B4 gebildet wird, indem simulierte Gaskriterien K_{SIM} für unterschiedliche Nockenwellenstellungen NW_{SIM} modelliert werden. Dabei wird die Nockenwellenstellung virtuell zwischen einer maximalen Stellung NW_{SIMmax} und einer minimalen Stellung NW_{SIMmin} variiert. Zur Modellierung der Gaskriteriumsschar K_{SIM1-n} können folgende Mittel herangezogen werden: neuronale Netze, Gausssche Prozessmodelle, Polynommodelle, inverse FFT (Fast Fourier Transformation) etc.

Diese so entstandene Gaskriteriumsschar K_{SIM1-n} wird an den Vergleichsblock B5 geliefert, wo sie mit dem erfassten IST-Gaskriterium verglichen wird (siehe Fig. 5).

Das IST-Gaskriterium (gefiltertes Gassignal) K_{IST} wird mit allen simulierten Gaskriterien K_{SIM} verglichen. Geeignete Vergleichsmethoden sind Kreuzkorrelationsverfahren, die Standardabweichung oder der Mittelwert der Differenzen aus den simulierten Gaskriterien K_{SIM} und dem IST-Gaskriterium K_{IST}.

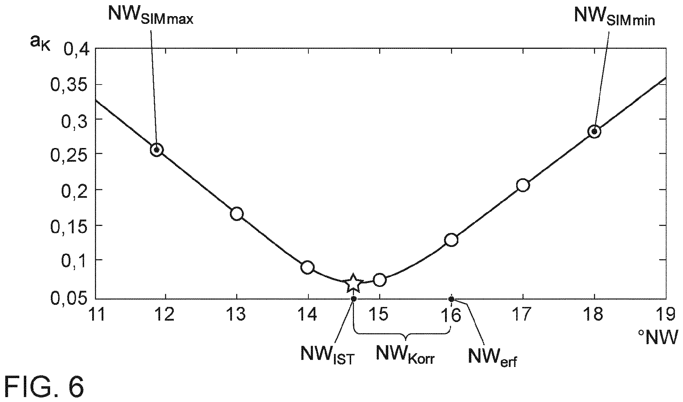

Fig. 6 zeigt die Auswertung für eine Standardabweichung a_{K}. Die dargestellte Kurve wird dabei aus den Standardabweichungen der Differenzen unterschiedlicher simulierter Gaskriterien K_{SIM} mit dem IST-Gaskriterium gebildet. Dabei gibt das Minimum der Kurve zwischen dem Verstellwinkel von 14 und 15 Grad der Nockenwellenstellung die tatsächliche IST-Nockenwellenstellung NW_{IST} für den Betriebszustand mit der erfassten Nockenwellenstellung NW_{erf} dar, für den das IST-Gaskriterium K_{IST} bestimmt wurde. Damit ergibt sich der Nockenwellenstellungs-Korrekturwert NW_{Korr} aus der Differenz zwischen der erfassten Nockenwellenstellung und der bestimmten IST-Nockenwellenstellung NW_{IST}. Mit diesem Wert können nun alle erfassten Nockenwellenstellungen korrigiert werden, so dass sie der tatsächlichen IST-Nockenwellenstellung entsprechen, auf deren Grundlage dann die entsprechenden Steuerdaten abgerufen werden können.

Weitere Variationen und Ausführungsbeispiele ergeben sich für den Fachmann im Namen der Ansprüche. Neben den oben beschriebenen Druckverläufen können als Gassignale auch Temperaturverläufe und/oder Volumenströme dienen. Das hier am Beispiel einer Einlass-Nockenwelle beschriebene Verfahren lässt sich auch auf eine Auslass-Nockenwelle übertragen. Es ist auch möglich, das oben beschriebene Verfahren auf andere Einstellungsanordnungen für Steuerungs- und Einstellungsanordnungen der Einlass- und Auslassventile zu übertragen und so entsprechende Ventilstellungskriterien K_{VS} im Block A2 (Fig. 2) abzuleiten.

### Bezugszeichenliste

- 100: Fahrzeug
- 1: Verbrennungsmotor
- 2: Ansaugkrümmer
- 3: Drosselklappe
- 4: Einlassventil
- 5: Verbrennungsraum
- 6: Zylinder
- 7: Einlass-Nockenwelle
- 8: Kolben
- 9: Kurbelanordnung
- 10: Kurbelwelle
- 11: Auslassventil
- 12: Abgaskrümmer
- 13: Turbine
- 14: Auslass-Nockenwelle
- 15: Antriebsriemen
- 16: Kurbelwellen-Sensor
- 17: Einlass-Nockenwellen-Sensor
- 18: Auslass-Nockenwellen-Sensor
- 19: Motorsteuergerät
- 20: Gassignalsensor-Ansaugkrümmer
- 21: Gassignalsensor-Abgaskrümmer
- p₂: Ansaugdruck
- p₃: Abgasgegendruck
- A: Erfassungssteuerblock
- B: Steuerblock
- p₁: Umgebungsdruck
- T₂: Temperatursaugrohr
- n: Drehzahl
- S_{IST}: Signalverlauf
- K_{IST}: IST-Gaskriterium
- K_{SIM}: simuliertes Gaskriterium
- K_{SIM1-n}: Gaskriteriumsschar
- a_{K}: Standardabweichung
- NW_{SIMmax}: Nockenwellenstellung maximal
- NW_{SIMmin}: Nockenwellenstellung minimal
- NW_{IST}: IST-Nockenwellenstellung
- NW_{erf}: erfasste Nockenwellenstellung
- NW_{Korr}: Nockenwellenstellungs-Korrekturwert
- K_{VS}: Ventilstellungskriterium

## Patentansprüche

1. Verfahren zur Adaption einer erfassten Nockenwellenstellung (NW_{erf}) einer Nockenwelle (7; 14) in einem Verbrennungsmotor (1) mit:
- Erfassen eines IST-Gassignals (S_{IST}) in einem der Nockenwelle (7; 14) zugeordneten Gasraum (2; 12), das einer erfassten Nockenwellenstellung (NW_{erf}) zugeordnet ist
- Verarbeiten des Gassignals (S_{IST}) zu einem IST-Gaskriterium (K_{IST}), wobei das Verarbeiten des IST-Gassignals (S_{IST}) zu einem Gaskriterium (K_{IST}) mittels eines Signalfilterverfahrens erfolgt,
- Modellieren mehrerer simulierter Gaskriterien (K_{SIM}), die jeweils einer Soll-Nockenwellenstellung (NW_{SOLL}) zugeordnet sind,
- Vergleichen der simulierten Gaskriterien (K_{SIM}) mit dem IST-Gaskriterium (K_{IST}),
- Bestimmen eines simulierten Gaskriteriums (K_{SIM}) mit der geringsten Abweichung vom IST-Gaskriterium (K_{IST}),
- Bestimmen einer IST-Nockenwellenstellung (NW_{IST}), die dem simulierten Gaskriterium (K_{SIM}) mit der geringsten Abweichung zum IST-Gaskriterium (K_{IST}) entspricht,
- Bestimmung eines Nockenwellenstellungs-Korrekturwertes (NWKorr) aus der Differenz zwischen der bestimmten IST-Nockenwellenstellung (NW_{IST}) und der erfassten Nockenwellenstellung (NW_{erf}),
- Bestimmen korrigierter Nockenwellenstellungen (NW_{Korr}) mittels Korrektur der erfassten Nockenwellenstellungen (NW_{erf}) um den Nockenwellenstellungs-Korrekturwert (NWKorr).

2. Verfahren nach Anspruch 1, wobei die korrigierten Nockenwellenstellungen (NW_{Korr}) einer Einlassnockenwelle (7) und/oder einer Auslassnockenwelle (14) bestimmt werden.

3. Verfahren nach Anspruch 1 oder 2, aufweisend:
- Modellieren eines Ventilstellungskriteriums (K_{VS}) eines Einlass- und/oder eines Auslassventils (4; 11) auf der Grundlage der korrigierten Nockenwellenstellungen.

4. Verfahren nach Anspruch 3, aufweisend:
- Modellieren einer Gasfüllung auf der Grundlage der modellierten Ventilstellungskriterien (Kvs).

5. Verfahren nach einem der Ansprüche 1 bis 4, wobei die erfasste Nockenwellenstellung (NW_{erf}) mittels einer Nockenwellen- und einer Kurbelwellenstellungssensoranordnung (17, 18, 16) in Relation zu einer Kurbelwellenstellung bestimmt wird.

6. Verfahren nach Anspruch 5, wobei die Nockenwellen- und/oder die Kurbelwellenstellungssensoranordnung (17, 18, 16) einen der folgenden Sensoren umfasst: induktiver Drehzahlsensor; Differential-Hall-Sensor; AMR-Sensor; Hall-Phasensensor.

7. Verfahren nach einem der Ansprüche 1 bis 6, wobei das IST-Gassignal (S_{IST}) ein IST-Drucksignal (p₂; p₃) ist.

8. Verfahren nach einem der Ansprüche 1 bis 7, wobei das IST-Gassignal (S_{IST}) als Ansaugrohrdruckverlaufssignal (p₂) in einem Ansaugkrümmer (2) erfasst wird.

9. Verfahren nach einem der Ansprüche 1 bis 8, wobei das IST-Gassignal (S_{IST}) als Abgasrohrdruckverlaufssignal (p3) in einem Abgaskrümmer (12) erfasst wird.

10. Verfahren nach einem der Ansprüche 1 bis 9, wobei das Erzeugen der simulierten Gaskriterien (K_{SIM}) mittels eines computerimplementierten Modellierungsverfahrens erfolgt, insbesondere unter Verwendung eines der folgenden Mittel: Neuronale Netz, Gausssches Prozessmodell, Polynommodel, inverse FFT.

11. Verfahren nach einem der Ansprüche 1 bis 10, wobei zum Bestimmen einer IST-Nockenwellenstellung (NW_{IST}) eines der folgenden computerimplementierten Vergleichsverfahren durchgeführt wird: Kreuzkorrelationsverfahren, Standardabweichung, Mittelwertbildung.

12. Motorsteuergerät (19), das dazu eingerichtet und ausgebildet ist, das Verfahren nach einem der Ansprüche 1 bis 11 auszuführen.

13. Verbrennungsmotor (1) mit einer Einlass- und einer Auslassventilanordnung (4; 11) zur Einstellung einer Gasmenge und einem Motorsteuergerät (19) nach Anspruch 12.

14. Fahrzeug (100) mit einem Verbrennungsmotor (1) nach Anspruch 13.

## Claims

1. Method for adapting a detected camshaft position (NW_{erf}) of a camshaft (7; 14) in an internal combustion engine (1), the method comprising:
- detecting an ACTUAL gas signal (S_{IST}) in a gas space (2; 12) that is associated with the camshaft (7; 14) and is associated with a detected camshaft position (NW_{erf}),
- processing the gas signal (S_{IST}) to produce an ACTUAL gas criterion (K_{IST}), wherein the ACTUAL gas signal (S_{IST}) is processed to produce an ACTUAL gas criterion (K_{IST}) by means of a signal filtering method,
- modelling multiple simulated gas criteria (K_{SIM}), which are each associated with a target camshaft position (NW_{SOLL}),
- comparing the simulated gas criteria (K_{SIM}) with the ACTUAL gas criterion (K_{IST}),
- determining a simulated gas criterion (K_{SIM}) with the least deviation from the ACTUAL gas criterion (K_{IST}),
- determining an ACTUAL camshaft position (NW_{IST}) that corresponds to the simulated gas criterion (K_{SIM}) with the least deviation from the ACTUAL gas criterion (K_{IST}),
- determining a camshaft position correction value (NW_{Korr}) from the difference between the determined ACTUAL camshaft position (NW_{IST}) and the detected camshaft position (NW_{erf}),
- determining corrected camshaft positions (NW_{Korr}) by correcting the detected camshaft positions (NW_{erf}) with the camshaft position correction value (NW_{Korr}).

2. Method according to Claim 1, wherein the corrected camshaft positions (NW_{Korr}) of an intake camshaft (7) and/or an exhaust camshaft (14) are determined.

3. Method according to Claim 1 or 2, comprising:
- modelling a valve position criterion (K_{VS}) of an intake and/or exhaust valve (4; 11) on the basis of the corrected camshaft positions.

4. Method according to Claim 3, comprising:
- modelling a gas charge on the basis of the modelled valve position criteria (K_{VS}) .

5. Method according to any one of Claims 1 to 4, wherein the detected camshaft position (NW_{erf}) is determined in relation to a crankshaft position by means of a camshaft and crankshaft position sensor arrangement (17, 18, 16).

6. Method according to Claim 5, wherein the camshaft and/or crankshaft position sensor arrangement (17, 18, 16) comprises one of the following sensors: an inductive speed sensor; a differential Hall sensor; an AMR sensor; a Hall phase sensor.

7. Method according to any one of Claims 1 to 6, wherein the ACTUAL gas signal (S_{IST}) is an ACTUAL pressure signal (P2; p₃).

8. Method according to any one of Claims 1 to 7, wherein the ACTUAL gas signal (S_{IST}) is detected as an intake pipe pressure behaviour signal (p₂) in an intake manifold (2).

9. Method according to any one of Claims 1 to 8, wherein the ACTUAL gas signal (S_{IST}) is detected as an exhaust pipe pressure behaviour signal (p₃) in an exhaust manifold (12) .

10. Method according to any one of Claims 1 to 9, wherein the generation of the simulated gas criteria (K_{SIM}) is performed by means of a computer-implemented modelling method, in particular using one of the following means: a neural network, a Gaussian process model, a polynomial model, an inverse FFT.

11. Method according to any one of Claims 1 to 10, wherein one of the following computer-implemented comparison methods is performed in order to determine an ACTUAL camshaft position (NW_{IST}): a cross-correlation method, standard deviation or average formation.

12. Engine control unit (19) configured and designed to carry out the method according to any one of Claims 1 to 11.

13. Internal combustion engine (1) comprising an intake and exhaust valve arrangement (4; 11) for setting a gas quantity and an engine control unit (19) according to Claim 12.

14. Vehicle (100) comprising an internal combustion engine (1) according to Claim 13.

## Revendications

1. Procédé d'adaptation d'une position détectée d'arbre à cames (NW_{erf}) d'un arbre à cames (7 ; 14) dans un moteur à combustion interne (1), comprenant :
- détection d'un signal des gaz réels (S_{IST}) dans un espace à gaz (2 ; 12) associé à l'arbre à cames (7 ; 14), lequel est associé à une position détectée d'arbre à cames (NW_{erf}),
- traitement du signal des gaz (S_{IST}) en un critère de gaz réels (K_{IST}), le traitement du signal des gaz réels (S_{IST}) en un critère de gaz réels (K_{IST}) s'effectuant au moyen d'un procédé de filtrage de signal,
- modélisation de plusieurs critères de gaz simulés (K_{SIM}) qui sont respectivement associés à une position de consigne d'arbre à cames (NW_{SOLL}),
- comparaison des critères de gaz simulés (K_{SIM}) au critère de gaz réels (K_{IST}),
- détermination d'un critère de gaz simulés (K_{SIM}) ayant le plus petit écart par rapport au critère de gaz réels (K_{IST}),
- détermination d'une position réelle d'arbre à cames (NW_{IST}), laquelle correspond au critère de gaz simulés (K_{SIM}) ayant le plus petit écart par rapport au critère de gaz réels (K_{IST}),
- détermination d'une valeur de correction de position d'arbre à cames (NW_{KORR}) à partir de la différence entre la position réelle d'arbre à cames (NW_{IST}) déterminée et la position détectée d'arbre à cames (NW_{erf}),
- détermination de positions corrigées d'arbre à cames (NW_{KORR}) au moyen de la correction des positions détectées d'arbre à cames (NW_{erf}) et de la valeur de correction de position d'arbre à cames (NW_{KORR}) .

2. Procédé selon la revendication 1, les positions corrigées d'arbre à cames (NW_{KORR}) d'un arbre à cames d'admission (7) et/ou d'un arbre à cames d'échappement (14) étant déterminées.

3. Procédé selon la revendication 1 ou 2, comprenant :
- modélisation d'un critère de position de soupape (K_{VS}) d'une soupape d'admission et/ou d'échappement (4 ; 11) sur la base des positions corrigées d'arbre à cames.

4. Procédé selon la revendication 3, comprenant :
- modélisation d'un remplissage de gaz sur la base des critères de position de soupape (K_{VS}) modélisés.

5. Procédé selon l'une des revendications 1 à 4, la position détectée d'arbre à cames (NW_{erf}) étant déterminée au moyen d'un arrangement capteur de position d'un arbre à cames et d'un vilebrequin (17, 18, 16) en relation avec une position de vilebrequin.

6. Procédé selon la revendication 5, l'arrangement capteur de position d'arbre à cames et/ou de vilebrequin (17, 18, 16) comportant l'un des capteurs suivants : capteur de vitesse de rotation inductif, capteur à effet Hall différentiel, capteur AMR, capteur de phase à effet Hall.

7. Procédé selon l'une des revendications 1 à 6, le signal des gaz réels (S_{IST}) étant un signal de pression réel (p₂ ; p₃).

8. Procédé selon l'une des revendications 1 à 7, le signal des gaz réels (S_{IST}) étant acquis sous la forme d'un signal d'évolution de pression de tube d'aspiration (p₂) dans un collecteur d'aspiration (2).

9. Procédé selon l'une des revendications 1 à 8, le signal des gaz réels (S_{IST}) étant acquis sous la forme d'un signal d'évolution de pression de tube d'échappement (p3) dans un collecteur d'échappement (12).

10. Procédé selon l'une des revendications 1 à 9, la génération du critère de gaz simulés (K_{SIM}) s'effectuant au moyen d'un procédé de modélisation mise en œuvre par ordinateur, notamment en utilisant l'un des moyens suivants : réseau neuronal, modèle de processus gaussien, modèle polynomial, FFT inverse.

11. Procédé selon l'une des revendications 1 à 10, l'un des procédés de comparaison mis en œuvre par ordinateur suivants étant exécuté pour la détermination d'une position réelle d'arbre à cames (NW_{IST}) : procédé de corrélation croisée, écart-type, calcul de la moyenne.

12. Contrôleur de moteur (19), qui est conçu et configuré pour mettre en œuvre le procédé selon l'une des revendications 1 à 11.

13. Moteur à combustion interne (1) comprenant un arrangement de soupapes d'admission et/ou d'échappement (4 ; 11) destiné à régler une quantité de gaz et un contrôleur de moteur (19) selon la revendication 12.

14. Véhicule (100), comprenant un moteur à combustion interne (1) selon la revendication 13.
